# EUROPÄISCHE PATENTSCHRIFT

(11) **EP 1 022 919 B1**
(45) Veröffentlichungstag und Bekanntmachung des Hinweises auf die Patenterteilung: **13.10.2004**
(21) Anmeldenummer: 00100680.8
(22) Anmeldetag: 13.01.2000
(51) Int. Cl.: H04Q 7/38

(54) **Mobilfunknetz und Verfahren zur Steuerung der Erreichbarkeit von Endgeräten eines Mobilfunknetzes**
Mobile radio network and method to control the availability of terminals in a mobile radio network
Réseau mobile radio et procédé pour la gestion de l'accessibilité de terminaux dans un réseau mobile radio

(30) Priorität: 22.01.1999 DE 19902535
(43) Veröffentlichungstag der Anmeldung: 26.07.2000
(73) Patentinhaber: SIEMENS AKTIENGESELLSCHAFT, 80333 München (DE)
(72) Erfinder: Schwarz, Leopold, 2061 Hadres (AT); Moneke, Klaus, 14089 Berlin (DE)

(56) Entgegenhaltungen:
- EP-A- 0 711 090
- EP-A- 0 858 233
- WO-A-94/17644
- WO-A-95/35001
- WO-A-99/01998
- DE-A- 19 646 485

## Beschreibung

Die Erfindung bezieht sich auf ein Verfahren zur Steuerung der Erreichbarkeit von Endgeräten eines Mobilfunknetzes, welches als Intelligentes Netz mit einer Vermittlungseinrichtung, einem Heimatregister, einem Dienststeuerpunkt und Basisstationen ausgebildet ist.

Ebenso bezieht sich die Erfindung auf ein Mobilfunknetz, welches als Intelligentes Netz mit einer Vermittlungseinrichtung, einem Heimatregister, einem Dienststeuerpunkt und Basisstationen ausgebildet ist.

Im Rahmen der Erfindung sollen vor allem öffentliche Mobilfunknetze wie das bekannte GSM-Netz betrachtet werden, wobei zu anderen Netzen, insbesondere Festnetzen, entsprechende Vermittlungseinrichtungen, meist Gateway-Vermittlungen genannt, vorgesehen sind.

In intelligenten Netzen werden zusätzlich zu den Grunddiensten des Telekommunikationsnetzes den Teilnehmern Zusatzdienste angeboten, wie z. B. ein Dienst der Anruferkontrolle, durch den der Teilnehmer nur für ausgewählte Anrufer erreichbar ist etc. Für die Durchführung dieser Dienste ist in dem Intelligenten Netz eine Dienststeuerstation vorgesehen, welche im allgemeinen von den Vermittlungseinrichtungen des Intelligenten Netzes verschieden ist.

In Mobilfunknetzen sind an die Vermittlungseinrichtungen jeweils Basisstationen angeschlossen, mit deren Hilfe über eine Luftschnittstelle Telekommunikationsendgeräte bindbar" sind. Diese Endgeräte ermöglichen einen Teilnehmer des Mobilnetzes den Netzzugang. Die Vermittlungseinrichtungen des Mobilnetzes sind darüberhinaus auch für den Übergang zu weiteren Netzen, z.B. einem Datenübertragungsnetz oder einem Festnetz, eingerichtet.

In einem GSM-Mobilfunknetz ist es weiters bekannt, innerhalb des Netzes Speichereinheiten zu verwenden, in denen jeweils Teilnehmer-spezifische Daten zu den netzeigenen Diensten gespeichert sind. Eine dieser Speichereinheiten realisiert das sogenannte Heimatregister, auch HLR oder Home Location Register genannt, das sich in der Regel an einem fest definierten Ort befindet, und in dem die der Registrierung des Teilnehmers zugrundeliegenden Daten abgelegt sind. Für den mobilen Teilnehmer und der mit ihm in Verbindung stehenden Basisstation ist eine Speichereinheit als sogenannte Besucherregister, auch VLR oder Visiting Location Register genannt, vorgesehen, in dem sich die teilnehmer- und verbindungsspezifischen Daten befinden. Die Speichereinheit für das Besucherregister ändert sich je nach Aufenthaltsort des mobilen Teilnehmers.

Für die Kommunikation zwischen den Vermittlungseinheiten werden zur Zeit verschiedene Protokolle eingesetzt, so etwa INAP-Protokolle (Intelligent Network Application Part) wie z. B. das Core INAP nach der ETSI-Spezifikation 300 374-1, Juli 1994, der Europäischen Normeninstituts für Telekommunikation (ETSI) oder das MAP-Protokoll (Mobile Application Part) des GSM-Standards. Diese Protokolle werden üblicherweise netzintern verwendet. Weiterhin ist aus den ETSI-Spezifikationen GSM 03.78 und GSM 09.02 eine sogenannte CAMEL Plattform (Customized Application for Mobile network Enhanced Logic) bekannt, mit der die Unterstützung von zusätzlichen anbieterspezifischen Diensten für Teilnehmer ermöglicht werden soll. Der CAMEL-Standard legt hierfür ein CAP-Protokoll (CAMEL Application Part) fest, innerhalb dessen Signalisierungsmeldungen zwischen dem Heimatregister und einer Dienststeuerstation austauschbar sind. Im Rahmen der Erfindung wird vor allem das eingangs genannte INAP-Protokoll in Betracht gezogen.

Einem Mobiltelefon bzw. mobilen Endgerät ist üblicherweise eine bestimmte Rufnummer zugeordnet. Falls in einem Haushalt oder einem Betrieb mehrere Personen ein besitzen, so ist jedem dieser Mobilgeräte eine eigene Rufnummer zugeordnet. Dies wird sowohl von Mitgliedern des Haushaltes oder Angestellten einer Firma, als auch für einen Anrufer in vielen Fällen nachteilig empfunden, insbesondere dann, wenn man beispielsweise irgendein Mitglied des Haushaltes erreichen möchte, und dann sämtliche Rufnummern versuchen muß, bis man einen Teilnehmer erreicht.

Gemäß WO 95/35001 wird ein in Bezug auf den anrufenden Teilnehmer des Kommunikationsnetzes am besten geeigneter Zielteilnehmer der durch eine Gruppenrufnummer festgelegten Zielgruppe ausgewählt, um eine Verbindung zu diesem mobilen Zielteilnehmer aufzubauen. Vor der Auswahl des mobilen Zielteilnehmers werden von der Einrichtung des Mobilfunknetzes Informationen über die Aufenthaltsorte der mobilen Teilnehmer der durch die gewählte Gruppenrufnummer festgelegten Zielgruppe und eine Information über den Aufenthaltsort des angerufenen Teilnehmers des Kommunikationsnetzes ermittelt und ausgewertet.

In EP 0 858 233 wird beschrieben, dass mehrere Funktelefone sich eine Zentralnummer teilen können. Diese Funktelefone, die eine Zentralnummer gemeinsam benutzen, können auch untereinander eine zusätzliche Erweiterungsnummer zur Interkommunikation verwenden.

In DE 44 42 307 wird offenbart, dass in einem die Netzstruktur eines intelligenten Netzes unterstützenden Kommunikationsnetzes durch Aufbau einer Signalisierungsverbindung zu dem angerufenen Netzteilnehmer in der für den anrufenden Netzteilnehmer zuständigen Vermittlungseinrichtung auf Teilnehmerdaten des angerufenen Netzteilnehmers frühzeitig zugegriffen wird, die normalerweise erst in der Vermittlungseinrichtung des angerufenen Netzteilnehmers zur Verfügung stünden. Hierbei werden neben den üblichen Teilnehmerdaten zusätzlich mindestens eine Dienstkennung als individuelles Teilnehmerdatum in das Heimatregister bzw. das jeweils aktuell zuständige Besucherregister eingetragen.

Keines der genannten Dokumente bietet eine zufriedenstellende Lösung für den oben als nachteilig empfundenen Zustand.

Eine Aufgabe der Erfindung liegt darin, diesen als nachteilig empfundenen Zustand zu ändern, und eine einfache und praktikable Lösung hierzu anzubieten.

Ausgehend von einem Verfahren der eingangs genannten Art wird diese Aufgabe erfindungsgemäß dadurch gelöst, daß bei einer Klasse von zentralen Rufnummern jeder solchen Zentralrufnummer mehrere zusätzliche Auswahlnummer und jeder Zentralrufnummer in dem Heimatregister eine Markierung zugeordnet wird, bei zu Zentralrufnummern einlangenden Rufen in dem Heimatregister die Markierung zu der Zentralrufnummer gefügt, und die markierte Zentralrufnummer an die Vermittlungseinrichtung weitergegeben wird, sowie in der Vermittlungseinrichtung aufgrund der Markierung ein Dialog zum Dienststeuerungspunkt ausgelöst und dort eine Servicelogik aufgerufen wird, welche die Zustellung des Rufes zu Endgeräten mit derselben Zentralrufnummer, jedoch unterschiedlicher Auswahlnummern abhängig davon, ob ein Ruf zu einer Zentralrufnummer mit zusätzlicher Auswahlnummer oder ohne zusätzliche Auswahlnummern eingelangt ist, unter Berücksichtigung eines vorgegebenen Hierarchieschemas steuert.

Die Erfindung ermöglicht es, einen Teilnehmer, der einer zentralen Rufnummer zugeordnet ist, gezielt zu erreichen oder durch Weglassen der Auswahlnummer zu einem anwesenden Teilnehmer zu gelangen, wobei das vorgebbare Hierarchieschema die Auswahl vorsieht.

Dabei zeichnet sich eine vorteilhafte Variante dadurch aus, daß die Servicelogik versucht, einen Ruf, der zu einer Zentralrufnummer ohne zusätzliche Auswahlnummern einlangt, an das in der Hierarchie jeweils oberste Endgerät zuzustellen.

Um eine allenfalls gewünschte persönlichkeitsspezifische Auswahl zu ermöglichen, kann auch vorgesehen sein, daß die Steuerlogik versucht, einen Ruf, der zu einer Zentralrufnummer mit Auswahlnummer einlangt, ausschließlich an das der Auswahlnummer zugeordnete Endgerät zuzustellen.

Eine einfache Markierung ergibt sich dadurch, daß jeder Zentralrufnummer als Markierung eine Service Class Mark zugeordnet wird. Solche Service Class Marks sind in der eingangs genannten Empfehlung ETS 300 374 festgelegt und daher dem Fachmann vertraut.

Eine den Erfordernissen angepaßte, rasche Abwicklung des Dialoges ist sichergestellt, falls der Dialog über das Intelligente Netzwerk Protokoll INAP geführt wird.

Das Verfahren nach der Erfindung ist besonders bei einem als GSM-Netz ausgebildeten Mobilfunknetz vorteilhaft.

Die Aufgabe der Erfindung läßt sich auch mit einem Mobilfunknetz der oben angegebenen Art lösen, bei welchem erfindungsgemäß bei einer Klasse von zentralen Rufnummern jeder solchen Zentralrufnummer mehrere zusätzliche Auswahlnummer, und jeder Zentralrufnummer in dem Heimatregister eine Markierung zugeordnet ist, und welches dazu eingerichtet ist, bei zu Zentralrufnummern einlangenden Rufen in dem Heimatregister die Markierung zu der Zentralrufnummer zu fügen, und diese markierte Rufnummer an die Vermittlungseinrichtung weiterzugeben, sowie in der Vermittlungseinrichtung aufgrund der Markierung einen Dialog zum Dienststeuerungspunkt auszulösen, und dort eine Servicelogik aufzurufen, welche die Zustellung des Rufes zu Endgeräten mit derselben Zentralrufnummer, jedoch unterschiedlicher Auswahlnumnern abhängig davon, ob ein Ruf zu einer Zentralrufnummer mit zusätzlicher Auswahlnummer oder ohne zusätzliche Auswahlnummern eingelangt ist, unter Berücksichtigung eines vorgegebenen Hierarchieschemas steuert.

Entsprechend dem erfindungsgemäßen Verfahren zeichnen sich vorteilhafte Varianten dadurch aus, daß die Servicelogik dazu ausgebildet ist, zu versuchen, einen Ruf, der zu einer Zentralrufnummer ohne zusätzliche Auswahlnummern einlangt, an das in der Hierarchie jeweils oberste Endgerät zuzustellen. Bei einer anderen Variante ist vorgesehen, daß die Servicelogik dazu ausgebildet ist, zu versuchen einen Ruf, der zu einer Zentralrufnummer mit Auswahlnummer einlangt, ausschließlich an das der Auswahlnummer zugeordnete Endgerät zuzustellen.

Ebenso ist eine Variante möglich, bei welcher jeder Zentralrufnummer als Markierung eine Service Class Mark zugeordnet ist, und es ist empfehlenswert, wenn das Protokoll zur Führung des Dialogs das Intelligente Netz-Protokoll INAP ist. Auch hier sind die Vorteile bei einem GSM-Netz vordergründig.

Die mit einem Mobilfunknetz gemäß der Erfindung und dessen Varianten erzielbaren Vorteile wurde bereits im Zusammenhang mit dem erfindungsgemäßen Verfahren genannt.

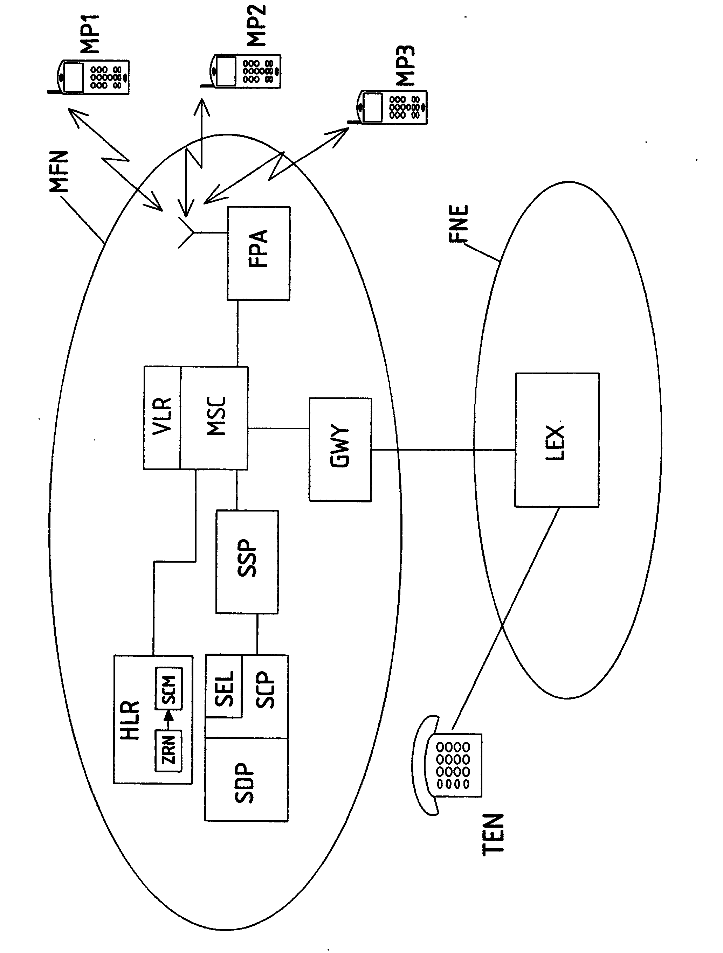

Die Erfindung samt anderer Vorteile ist im folgenden anhand einer beispielsweisen Ausführungsform näher erläutert, die in der Zeichnung veranschaulicht ist. In dieser zeigt die einzige Figur schematisch ein Mobilfunknetz, das hier an ein Festnetz angebunden ist.

In der Figur sind symbolisch ein Mobilfunknetz MFN, hier ein GSM-Netz, sowie ein Festnetz FNE, beispielsweise ein ISDN-Festnetz, dargestellt. Das Mobilfunknetz MFN besitzt eine Vermittlungseinrichtung MSC, an welche eine Basisstation FPA angeschlossen ist. Zu der Vermittlungseinrichtung MSC gehört meist ein Besucherregister VLR und die Vermittlungseinrichtungn MSC des Mobilfunknetzes MFN steht über eine Gateway-Vermittlung GWY mit einer Vermittlungseinrichtung LEX des Festnetzes FNE in Verbindung. Die Basisstation FPA kann innerhalb ihrer Zelle über eine Luftschnittstelle mit mehreren mobilen Endgeräten MP1, MP2 und MP3 in Verbindung treten, wogegen an die Vermittlungseinrichtung LEX des Festnetzes FNE Teilnehmer angeschlossen sind, hier ein Teilnehmer TEN.

Das Mobilfunknetz ist als Intelligentes Netz ausgebildet und weist eine dementsprechende Struktur auf. Die prinzipielle Struktur von intelligenten Netzen ist beispielsweise in Peter Bocker, ISDN, 4. Auflage, Kapitel 8.4, ISBN 3-540-57431-X, dargelegt. Insbesondere sei aber auch auf die eingangs genannten Empfehlungen verwiesen. Im vorliegenden Fall ist als für die Erfindung von Bedeutung ein Dienststeuerpunkt SCP mit einer Servicelogik SEL eingezeichnet, wobei der Zugang, hier von der Vermittlungseinrichtung MSC über einen sogenannten Service Switching Point SSP erfolgt. Dem Dienststeuerpunkt SCP assoziiert ist ein Speicher SDP, genannt Service Data Point. Das Mobilfunknetz MFN weist weiters, wie bereits eingangs erwähnt ein Heimatregister HLR auf.

Die Erfindung sieht nun eine eigene Klasse von Rufnummern vor, die im folgenden für die Zwecke der Erfindung "Zentralrufnummern' genannt werden, wobei diese Rufnummern jeweils einer Gruppe von Endgeräten MP1, MP2 und MP3 zugeordnet sind und für jedes Endgerät eine zusätzliche Auswahlnummer gewählt wird, beispielsweise für das Endgerät MP1 die Auswahlnummer 1", für das Endgerät MP2 die Auswahlnummer 2" und für das Endgerät MP3 die Auswahlnummer 3".

Endgeräte mit einer Zentralrufnummer und Auswahlnummern können beispielsweise innerhalb der Familienmitglieder eines Haushaltes Verwendung finden.

Dabei ist nun vorgesehen, daß in dem Heimatregister HLR jeder Zentralrufnummer ZRN eine Markierung SCM zugeordnet ist. Wenn nun ein Ruf zu einer Zentralrufnummer einlangt, so wird in dem Heimatregister die Markierung zu der Zentralrufnummer hinzugefügt, man spricht auch von einem IN-Trigger und diese markierte Rufnummer wird an die Vermittlungseinrichtung MSC weitergegeben, wodurch ein Dialog zum Dienststeuerungspunkt SCP ausgelöst, und in dem Dienststeuerungspunkt SCP eine Servicelogik SEL aufgerufen wird. Die Markierung SCM wird im Sprachgebrauch der Intelligenten Netze auch als Service Class Mark bezeichnet, und ist in den entsprechenden Empfehlungen wohl definiert. Das Protokoll zur Führung des Dialogs ist zweckmäßigerweise das sogenannte INAP-Protokoll für Intelligente Netze, das gleichfalls in den bereits eingangs genannten Empfehlungen festgelegt ist.

In der Servicelogik läßt sich nun das Vorgehen bei Einlangen von Rufen zu einer Zentralrufnummer in Abhängigkeit davon festlegen, ob lediglich die Zentralrufnummer gewählt wurde, ob die Zentralrufnummer mit einer Auswahlnummer gewählt wurde, und in welchem Betriebszustand sich die mobilen Endgeräte MP1, MP2 und MP3 befinden.

Nachstehend wird am Beispiel eines bestimmten Hierarchieschemas erläutert, wie die Rufzustellungsversuche bzw. Rufzustellungen zu den einzelnen mobilen Endgeräten erfolgen können. Es kann vorgesehen sein, daß bei einem Ruf zu einer Zentralrufnummer ohne zusätzliche Auswahlnummer die Servicelogik SEL versucht, mit Hilfe der Vermittlungseinrichtung MSC diesen Ruf an das hierarchisch höchstgelegene Endgerät, z.B. MP1 zuzustellen. Sollte dieses Endgerät nicht in Betrieb oder besetzt sein, so wird ein weiterer Verbindungsversuch zu dem hierarchisch nächst tieferen Endgerät MP2 durchgeführt u.s.f. Um den Zustand der gerufenen Teilnehmer zu ermitteln, armiert die Servicelogik SEL verschiedene Detection Points, wie "busy", "no answer", etc.

Falls ein Ruf zu einer Zentralrufnummer mit dazugefügter Auswahlnummer, z.B. der Auswahlnummer 2" für das mobile Endgerät MP2 einlangt, so wird dieser Ruf zu dem mobilen Endgerät MP2 weitergeleitet, doch erfolgen keine Rufzustellungsversuche an die anderen Endgeräte, falls das mobile Endgerät MP2 nicht betriebsbereit oder besetzt ist. Im vorliegenden Beispiel wurde angenommen, daß die Rufe seitens eines Teilnehmers TEN des Festnetzes FNE ausgehen, doch ist es für die Erfindung belanglos, von wo Rufe mit einer Zentralrufnummer ausgehen. Die rufenden Teilnehmer können ebenso Teilnehmer des Mobilfunknetzes MFN sein.

Die bereits eingangs genannten Vorteile der Erfindung, insbesondere für Haushalte und Firmen, lassen sich somit durch ein einfach zu realisierendes Zusatzmerkmal innerhalb eines Intelligenten Netzes realisieren.

## Patentansprüche

1. Verfahren zur Steuerung der Erreichbarkeit von Endgeräten (MP1, MP2, MP3) eines Mobilfunknetzes (MFN), welches als Intelligentes Netz mit einer Vermittlungseinrichtung (MSC), einem Heimatregister (HLR), einem Dienststeuerpunkt (SCP) und Basisstationen (FPA) ausgebildet ist,
**dadurch gekennzeichnet,**
**daß** bei einer Klasse von zentralen Rufnummern jeder solchen Zentralrufnummer mehrere zusätzliche Auswahlnummern und jeder Zentralrufnummer in dem Heimatregister (HLR) eine Markierung (SCM) zugeordnet wird,
bei zu Zentralrufnummern einlangenden Rufen in dem Heimatregister die Markierung zu der Zentralrufnummer gefügt und die markierte Zentralrufnummer an die Vermittlungseinrichtung (MSC) weitergegeben wird, sowie in der Vermittlungseinrichtung aufgrund der Markierung ein Dialog zum Dienststeuerungspunkt ausgelöst und dort eine Servicelogik (SEL) aufgerufen wird, welche die Zustellung des Rufes zu Endgeräten (MP1, MP2, MP3) mit derselben Zentralrufnummer jedoch unterschiedlicher Auswahlnummern abhängig davon, ob ein Ruf zu einer Zentralrufnummer mit zusätzlicher Auswahlnummer oder ohne zusätzliche Auswahlnummern eingelangt ist, unter Berücksichtigung eines vorgegebenen Hierarchieschemas steuert.

2. Verfahren nach Anspruch 1,
**dadurch gekennzeichnet, daß** die Servicelogik (SEL) versucht, einen Ruf, der zu einer Zentralrufnummer ohne zusätzliche Auswahlnummern einlangt an das in der Hierarchie jeweils oberste Endgerät (MP1) zuzustellen.

3. Verfahren nach Anspruch 1 oder 2,
**dadurch gekennzeichnet, daß** die Steuerlogik (SEL) versucht, einen Ruf, der zu einer Zentralrufnummer mit Auswahlnummer einlangt, ausschließlich an das der Auswahlnummer zugeordnete Endgerät (MP2) zuzustellen.

4. Verfahren nach einem der Ansprüche 1 bis 3,
**dadurch gekennzeichnet, daß** jeder Zentralrufnummer als Markierung eine Service Class Mark zugeordnet wird.

5. Verfahren nach einem der Ansprüche 1 bis 4,
**dadurch gekennzeichnet, daß** der Dialog über das intelligente Netzwerk Protokoll INAP geführt wird.

6. Verfahren nach einem der Ansprüche 1 bis 5, bei welchem das Mobilfunknetz ein GSM-Netz ist.

7. Mobilfunknetz (MFN), welches als Intelligentes Netz mit einer Vermittlungseinrichtung (MSC), einem Heimatregister (HLR), einem Dienststeuerpunkt (SCP) und Basisstationen (FPA) ausgebildet ist,
**dadurch gekennzeichnet,**
**daß** bei einer Klasse von zentralen Rufnummern jeder solchen Zentralrufnummer mehrere zusätzliche Auswahlnummern und jeder Zentralrufnummer in dem Heimatregister (HLR) eine Markierung (SCM) zugeordnet ist,
und welches dazu eingerichtet ist, bei zu Zentralrufnummern einlangenden Rufen in dem Heimatregister die Markierung zu der Zentralrufnummer zufügen und diese markierte Rufnummer an die Vermitttlungseinrichtung (MSC) weiterzugeben, sowie in der Vermittlungseinrichtung aufgrund der Markierung einen Dialog zum Dienststeuerungspunkt (SCP) auszulösen und dort eine Servicelogik (SEL) aufzurufen, welche die Zustellung des Rufes zu Endgeräten (MP1, MP2, MP3) mit derselben Zentralrufnummer jedoch unterschiedlicher Auswahlnummern abhängig davon, ob ein Ruf zu einer Zentralrufnummer mit zusätzlicher Auswahlnummer oder ohne zusätzliche Auswahlnummern eingelangt ist unter Berücksichtigung eines vorgegebenen Hierarchieschemas steuert.

8. Mobilfunknetz (MFN) nach Anspruch 7,
**dadurch gekennzeichnet, daß** die Servicelogik (SEL) dazu ausgebildet ist, zu versuchen, einen Ruf, der zu einer Zentralrufnummer ohne zusätzliche Auswahlnummern einlangt an das in der Hierarchie jeweils oberste Endgerät (MP1) zuzustellen.

9. Mobilfunknetz (MFN) nach Anspruch 7 oder 8,
**dadurch gekennzeichnet, daß** die Servicelogik (SEL) dazu ausgebildet ist zu versuchen, einen Ruf, der zu einer Zentralrufnummer mit Auswahlnummer einlangt, ausschließlich an das der Auswahlnummer zugeordnete Endgerät (MP2) zuzustellen.

10. Mobilfunknetz (MFN) nach einem der Ansprüche 7 bis 9,
**dadurch gekennzeichnet, daß** jeder Zentralrufnummer als Markierung eine Service Class Mark zugeordnet ist.

11. Mobilfunknetz (MFN) nach einem der Ansprüche 7 bis 10,
**dadurch gekennzeichnet, daß** das Protokoll zur Führung des Dialogs das Intelligente Netz-Protokoll INAP ist.

12. Mobilfunknetz (MFN) nach einem der Ansprüche 7 bis 11,
**dadurch gekennzeichnet, daß** es ein GSM-Netz ist.

## Claims

1. Method for controlling the accessibility of terminal devices (MP1, MP2, MP3) of a mobile radio network (MFN) which is implemented as an intelligent network comprising an exchange (MSC), a home register (HLR), a service control point (SCP) and base stations (FPA),
**characterised in that**
for a class of central call numbers, a plurality of additional selection numbers are assigned to each such central call number and each central call number in the home register (HLR) is assigned a marker (SCM),
in the case of incoming calls to central call numbers the marker is added to the central call number in the home register and the marked central call number is forwarded to the exchange (MSC), and a dialog with the service control point is also initiated in the exchange on the basis of the marker and service logic (SEL) is invoked there which controls the delivery of the call to terminal devices (MP1, MP2, MP3) with the same central call number but different selection numbers depending on whether a call has arrived for a central call number with additional selection number or without additional selection numbers, taking into account a predetermined hierarchy scheme.

2. Method according to claim 1,
**characterised in that** the service logic (SEL) attempts to deliver a call which arrives for a central call number without additional selection numbers to the terminal device (MP1) which is highest in the hierarchy in each case.

3. Method according to claim 1 or 2,
**characterised in that** the control logic (SEL) attempts to deliver a call which arrives for a central call number with selection number solely to the terminal device (MP2) which is assigned to that selection number.

4. Method according to one of the claims 1 to 3,
**characterised in that** a service class mark is assigned as a marker to each central call number.

5. Method according to one of the claims 1 to 4,
**characterised in that** the dialog is conducted via the intelligent network protocol INAP.

6. Method according to one of the claims 1 to 5, wherein the mobile radio network is a GSM network.

7. Mobile radio network (MFN) which is implemented as an intelligent network comprising an exchange (MSC), a home register (HLR), a service control point (SCP) and base stations (FPA),
**characterised in that**
for a class of central call numbers, a plurality of additional selection numbers are assigned to each such central call number and each central call number in the home register (HLR) is assigned a marker (SCM),
and which is set up such that in the case of incoming calls to central call numbers it adds the marker to the central call number in the home register and forwards this marked central call number to the exchange, and in the exchange it also initiates a dialog with the service control point (SCP) on the basis of the marker and invokes service logic (SEL) there which controls the delivery of the call to terminal devices (MP1, MP2, MP3) with the same central call number but different selection numbers depending on whether a call has arrived for a central call number with additional selection number or without additional selection numbers, taking into account a predetermined hierarchy scheme.

8. Mobile radio network (MFN) according to claim 7,
**characterised in that** the service logic (SEL) is designed to attempt to deliver a call to a central call number without additional selection numbers to the terminal device which is highest in the hierarchy (MP1) in each case.

9. Mobile radio network (MFN) according to claim 7 or 8,
**characterised in that** the service logic (SEL) is designed to attempt to deliver a call which arrives for a central call number with selection number solely to the terminal device (MP2) assigned to that selection number.

10. Mobile radio network (MFN) according to one of the claims 7 to 9,
**characterised in that** a service class mark is assigned as a marker to each central call number.

11. Mobile radio network (MFN) according to one of the claims 7 to 10,
**characterised in that** the protocol for conducting the dialog is the intelligent network protocol INAP.

12. Mobile radio network (MFN) according to one of the claims 7 to 11,
**characterised in that** it is a GSM network.

## Revendications

1. Procédé de commande de l'accessibilité de terminaux (MP1, MP2, MP3) d'un réseau de téléphonie mobile (MFN), lequel est exécuté comme réseau intelligent ayant un dispositif de commutation (MSC), un enregistreur de localisation nominal (HLR), un point de commande de service (SCP) et des stations de base (FPA),
**caractérisé en ce que**
pour une classe de numéros d'appel centraux, plusieurs numéros de sélection supplémentaires sont attribués à chaque tel numéro d'appel central et **en ce qu'**une marque (SCM) est attribuée à chaque tel numéro d'appel central dans l'enregistreur de localisation nominal (HLR),
en cas d'appels arrivant aux numéros d'appel centraux dans l'enregistreur de localisation nominal, la marque est ajoutée au numéro d'appel central et **en ce que** le numéro d'appel central marqué est transmis au dispositif de commutation (MSC), ainsi que dans le dispositif de commutation un dialogue est déclenché vers le point de commande de service en raison de la marque et qu'une logique de service (SEL) y est appelée, laquelle commande, en tenant compte d'un schéma hiérarchique prédéfini, la distribution de l'appel à des terminaux (MP1, MP2, MP3) ayant le même numéro d'appel central mais cependant différents numéros de sélection, en fonction du fait si un appel est arrivé à un numéro d'appel central en ayant un numéro de sélection supplémentaire ou sans numéros de sélection supplémentaires.

2. Procédé selon la revendication 1,
**caractérisé en ce que** la logique de service (SEL) tente de distribuer un appel, qui arrive à un numéro d'appel central sans numéros de sélection supplémentaires, au terminal (MP1) respectivement le plus élevé dans la hiérarchie.

3. Procédé selon la revendication 1 ou 2,
**caractérisé en ce que** la logique de commande (SEL) tente de distribuer un appel, qui arrive à un numéro d'appel central en ayant un numéro de sélection, exclusivement au terminal (MP2) attribué au numéro de sélection.

4. Procédé selon l'une quelconque des revendications 1 à 3,
**caractérisé en ce qu'**une Service Class Mark est attribuée comme marque à chaque numéro d'appel central.

5. Procédé selon l'une quelconque des revendications 1 à 4,
**caractérisé en ce que** le dialogue est mené par l'intermédiaire du protocole de réseau intelligent INAP.

6. Procédé selon l'une quelconque des revendications 1 à 5, dans lequel le réseau de téléphonie mobile est un réseau GSM.

7. Réseau de téléphonie mobile (MFN), lequel est exécuté comme réseau intelligent ayant un dispositif de commutation (MSC), un enregistreur de localisation nominal (HLR), un point de commande de service (SCP) et des stations de base (FPA),
**caractérisé en ce que**
pour une classe de numéros d'appel centraux, des numéros de sélection supplémentaires sont attribués à chaque tel numéro d'appel central et **en ce qu'**une marque (SCM) est attribuée à chaque numéro d'appel central dans l'enregistreur de localisation nominal (HLR),
et lequel est aménagé, en cas d'appels arrivant aux numéros d'appel centraux dans l'enregistreur de localisation nominal, de manière à ajouter la marque au numéro d'appel central et à transmettre le numéro d'appel central marqué au dispositif de commutation (MSC), ainsi que de manière à déclencher dans le dispositif de commutation un dialogue vers le point de commande de service en raison de la marque et à y appeler une logique de service (SEL), laquelle commande, en tenant compte d'un schéma hiérarchique prédéfini, la distribution de l'appel à des terminaux (MP1, MP2, MP3) ayant le même numéro d'appel central mais cependant différents numéros de sélection, en fonction du fait si un appel est arrivé à un numéro d'appel central en ayant un numéro de sélection supplémentaire ou sans numéros de sélection supplémentaires.

8. Réseau de téléphonie mobile (MFN) selon la revendication 7,
**caractérisé en ce que** la logique de service (SEL) est exécutée pour tenter de distribuer un appel, qui arrive à un numéro d'appel central sans numéros de sélection supplémentaires, au terminal (MP1) respectivement le plus élevé dans la hiérarchie.

9. Réseau de téléphonie mobile (MFN) selon la revendication 7 ou 8,
**caractérisé en ce que** la logique de service (SEL) est exécutée pour tenter de distribuer un appel, qui arrive à un numéro d'appel central en ayant un numéro de sélection, exclusivement au terminal (MP2) attribué au numéro de sélection.

10. Réseau de téléphonie mobile (MFN) selon l'une quelconque des revendications 7 à 9,
**caractérisé en ce qu'**une Service Class Mark est attribuée comme marque à chaque numéro d'appel central.

11. Réseau de téléphonie mobile (MFN) selon l'une quelconque des revendications 7 à 10,
**caractérisé en ce que** le protocole pour mener le dialogue est le protocole de réseau intelligent INAP.

12. Réseau de téléphonie mobile (MFN) selon l'une quelconque des revendications 7 à 11,
**caractérisé en ce que** c'est un réseau GSM.
